Europäisches Patentamt

European Patent Office

Office européen des brevets

(11) Veröffentlichungsnummer: **0 131 706**
**A2**

## (12) EUROPÄISCHE PATENTANMELDUNG

(21) Anmeldenummer: **84105343.2**

(22) Anmeldetag: **11.05.84**

(51) Int. Cl.⁴: **B 60 J 5/06**

(30) Priorität: **13.07.83 DE 3325260**

(43) Veröffentlichungstag der Anmeldung:
**23.01.85 Patentblatt 85/4**

(84) Benannte Vertragsstaaten:
**AT BE CH DE FR GB IT LI NL SE**

(71) Anmelder: **Hespe & Woelm GmbH & Co. KG
Hasselbecker Strasse 4
D-5628 Heiligenhaus(DE)**

(72) Erfinder: **Bufe, Hans-Werner
Gohrstrasse 43
D-5628 Heiligenhaus(DE)**

(74) Vertreter: **Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11(DE)**

(54) **Spannbare Vorhangplane.**

(57) Bei einer spannbaren Vorhangplane (5), insbesondere für LKW-Aufbauten, mit einer Decken- und einer Bodengleitschiene (1 und 13) zum seitlichen Verschieben der Vorhangplane (5) sowie Spannelementen (10) zum Verspannen der Vorhangplane zwischen den beiden Laufschienen wird eine Arbeitserleichterung beim Verschieben und Spannen der Vorhangplane sowie ein korrekter Sitz derselben dadurch erreicht, daß die Bodenlaufschiene (13) quer zu ihrer Längsrichtung verschiebbar ist und an ihr die Spannelemente (10) derart angreifen, daß sie die Vorhangplane (5) als Ganzes in einer von der Deckenlaufschiene (1) fortweisenden Richtung spannen.

Fig. 1

## S p a n n b a r e   V o r h a n g p l a n e

Die Erfindung betrifft eine spannbare Vorhangplane, insbesondere für Lastkraftwagenaufbauten, mit einer Decken- und einer Bodengleitschiene (-laufschiene) zum seitlichen Verschieben der Plane sowie Spannelementen zum Verspannen der Plane zwischen den beiden Gleitschienen.

Das Öffnen, Verschließen und Verspannen von LKW-Aufbau-Planen ist eine zeitraubende Arbeit, zu deren Erleichterung es bekannt ist, die Aufbauseiten eines LKW's mit einer Decken- und einer Bodengleitschiene zu versehen sowie darin gleitende (laufende) Gleit- oder Schiebeelemente (Rollapparate), an denen die Plane nach Art eines Vorhanges befestigt ist und seitlich wie ein Vorhang verschoben werden kann (Vorhangplane).

Solche Vorhangplanen müssen aber nach wie vor zwischen den Gleitschienen verspannt werden, damit sie korrekt sitzen und nicht flattern können. Hierzu sind in der britischen Offenlegungsschrift 21 06 573 A Aussteifungselemente der Plane vorgeschlagen worden, die innerhalb von auf die Plane aufgesetzten Taschen verlaufen. Dies gestattet zwar ein problemloses Verschieben der Vorhangplane, ist im Ergebnis aber insofern unbefriedigend, weil im zugezogenen Zustand die Vorhangplane nicht so stark gespannt ist, daß sie etwa im Fahrtwind nicht flattern könnte.

Um ein derartiges Flattern zu vermeiden, können zwischen der Decken- und der Bodenschiene verspannbare Gurte vorgesehen werden, wie sie z.B. aus der britischen Patentschrift 1 542 812 bekannt sind. Dann kann die Bodenschiene allerdings nicht mehr als Gleitschiene fungieren, sondern am unteren Gurtende befestigte Haken müssen einzeln in die Bodenschiene eingehängt werden. Anschließend müssen die Gurte einzeln von Hand noch nachgespannt werden, wenn die voreingestellte Vorspannung nicht ausreicht.

Davon ausgehend liegt der Erfindung die  A u f g a b e  zugrunde, eine spannbare Vorhangplane der eingangs genannten Art zu schaffen, die mechanisch und nicht mehr von Hand gespannt wird. Insbesondere wenn solche Vorhangplanen unter einer Vorspannung stehen, soll eine automatische Nachspannung zum Ausgleich von Spannungsunterschieden möglich sein.

Als technische  L ö s u n g  wird dafür vorgeschlagen, daß die Bodengleitschiene quer zu ihrer Längsrichtung verschiebbar ist und an ihr die Spannelemente derart angreifen, daß sie die Vorhangplane als Ganzes in einer von der Deckengleitschiene fortweisenden Richtung spannen.

Die erfindungsgemäße spannbare Vorhangplane hat den Vorteil, daß sie nunmehr unabhängig von unterschiedlichen Vorspannungen in verschiedenen Bereichen der Plane als Ganzes auf einmal mechanisch gespannt werden kann und daß dabei Spannungsunterschiede automatisch ausgeglichen werden.

Bei einer praktischen Ausführungsform der Erfindung erstreckt sich ein fest verankerter Bodenholm parallel oberhalb der Bodengleitschiene und verläuft in Zugrichtung der Spannelemente in Richtung auf den Bodenholm und im Winkel zur Planenrichtung zwischen den Gleitschienen. Hierdurch wird eine sehr niedrige Bauhöhe des geschlossenen Vorhanges erreicht, da das untere Ende der Plane um einen Bodenholm, wie z.B. der Ladefläche eines LKW's herumgezogen und in der Regel im rechten Winkel zur Vorhangrichtung zwischen den Gleitschienen, also in der Regel horizontal, verspannt wird. Hierbei kann der unter der Ladefläche eines LKW's stets vorhandene Freiraum wirkungsvoll genutzt werden.

Die Zahl der erforderlichen Spannelemente kann auf zwei in Extremfällen sogar auf ein einziges Spannelement reduziert werden, wenn die Bodengleitschiene in Spannrichtung biegeversteift ist. Hierzu wird an eine z.B. kastenförmige Schiene mit Längsschlitz ein dem Längsschlitz gegenüberliegender Stützsteg vorgesehen, an dem das Spannelement angreift. Dabei haben doppelt wirkende Kolben/Zylinder-Einheiten als Spannelemente den Vorteil, daß sie auf einfache Weise fernzubedienen sind und keinen besonderen Kraftaufwand durch die Bedienperson erfordern.

Die Plane tragende, in den Gleitschienen laufende Schiebeelemente (Gleitelemente) und zwischen je einem Deckenschiebeelement und einem Bodenschiebeelement verspannte Gurte verstärken die Plane und gestatten es, auch im entspannten Zustand der Spannelemente eine gewisse vertikale Vorspannung des Vorhanges aufrechtzuerhalten, so daß auch bei nicht geschlossenem Vorhang allzu starkes Flattern desselben vermieden wird.

Wenn ein im wesentlichen U-förmiges Bodenschiebeelement mit seinem unteren U-Schenkel in der Bodengleitschiene läuft, mit

seinem oberen U-Schenkel sich unterhalb eines fest verankerten, parallel oberhalb der Bodengleitschiene sich erstreckenden Bodenholmes abstützt und an seinem U-Bogen Befestigungselemente für die Plane vorgesehen sind, hat dies den Vorteil, daß die Bodengleitschiene stets gleichmäßig weit von dem Bodenholm beabstandet ist, ihm zumindest aber nicht unzuträglich nahekommen kann. Außerdem wird hierdurch vermieden, daß beim Einziehen des Bodenschiebeelementes unter den Bodenholm sich eine schräg zur Spannrichtung wirkende Reaktionskraft einstellen kann, die letztlich zu verfrühtem Verschleiß des Spannelementes führen könnte. Außerdem gestattet ein solches Bodenschiebeelement ein einfaches Vorspannen der etwa verwendeten Spanngurte.

Wenn die Bodengleitschiene im verspannten Zustand durch Verriegelungselemente in dieser Position festgehalten wird, wirkt sich ein Ausfall der Spannelemente nicht auf die Vorhangspannung aus. Außerdem kann dadurch eine einfache Diebstahlsicherung geschaffen werden, indem diese Verriegelungselemente abschließbar oder wenigstens von außen her nicht öffenbar sind. Hierzu sind die Verriegelungselemente bevorzugt an den Enden der Bodengleitschiene angeordnet.

Weitere Einzelheiten, Merkmale und Vorteile des Gegenstandes der Erfindung ergeben sich aus der nachfolgenden Beschreibung der zugehörigen Zeichnungen, in denen eine bevorzugte Ausführungsform einer spannbaren Vorhangplane dargestellt worden ist. In den Zeichnungen zeigen:

Fig. 1    einen LKW-Auflieger mit spannbaren Vorhangplanen in perspektivischer Darstellung;

Fig. 2    einen Ausschnitt aus dem Deckenbereich der in Fig. 1 dargestellten spannbaren Vorhangplane;

Fig. 3a          eine entsprechende Darstellung des Bodenbereiches;

Fig. 3b          derselbe Bereich im Schnitt entlang der
                 Linie III-III in Fig. 3a;

Fig. 4           ein Spannelement mit Bodengleitschiene gemäß

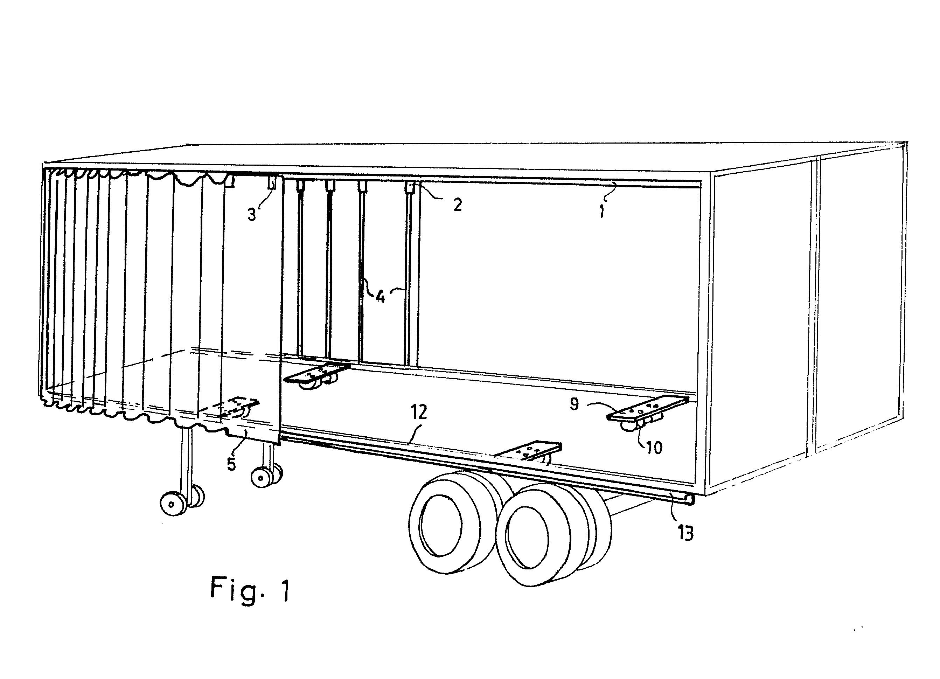

                 Fig. 1 im vergrößerten Ausschnitt in Spannposition sowie

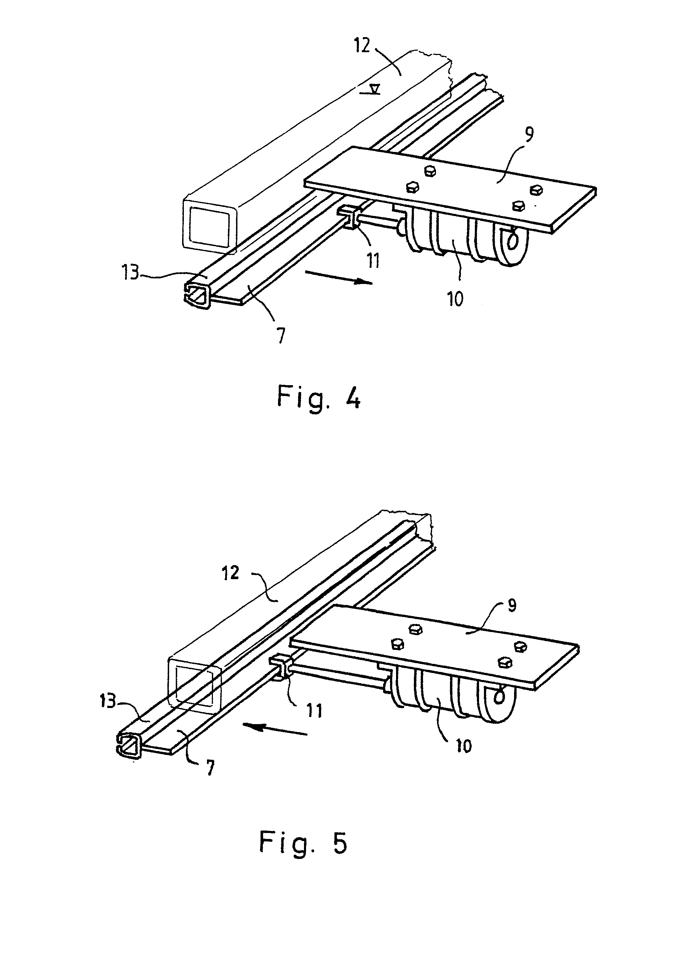

Fig. 5           dasselbe Spannelement mit Bodengleitschiene
                 in der entspannten Position.

Bei einem LKW-Auflieger ist eine kastenförmige Deckengleitschiene
1 mit nach unten weisendem Längsschlitz an der Dachkonstruktion
des Aufliegers befestigt. In dem Schlitz wird ein Deckengleitelement bekannter Bauart geführt. An dem Deckengleitelement
2 wird eine an sich bekannte Vorhangplane 5 sowie ein Gurt 4
mittels einer Gegenplatte 3 fest verschraubt.

Unter der Ladefläche befindet sich eine ähnlich wie die Deckengleitschiene ausgebildete Bodengleitschiene 13, deren Schlitz
etwa waagerecht nach außen zeigt.

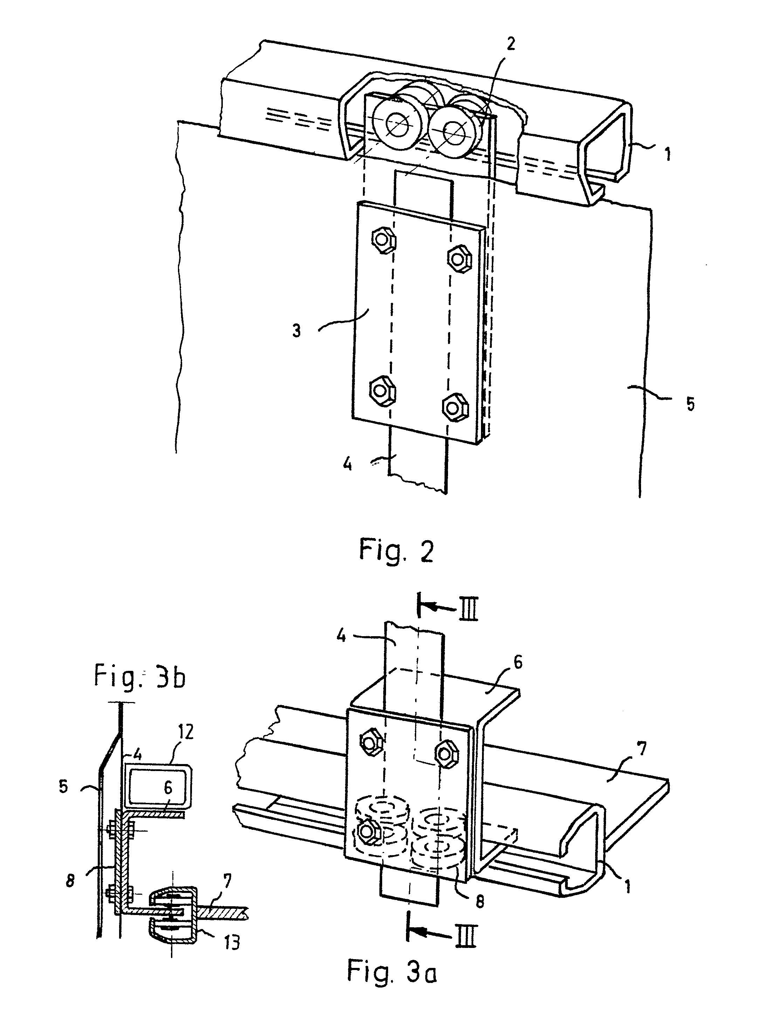

Die Bodengleitschiene 13 ist quer zu ihrer Längsrichtung verschiebbar. Hierzu dienen Spannelemente 10 in der Form doppelt
wirkender Pneumatik-Zylinder, die mit ihrer Grundplatte 9 unter
der Ladefläche des LKW-Aufliegers verschraubt sind und bei
denen ein am freien Ende der Kolbenstange befestigter Gabelkopf
11 an einem Verstärkungsblech 7 angreift, das auf der Rückseite
der Bodengleitschiene 13 mit dieser verschweißt ist und sie
quer zur Spannrichtung so biegesteif macht, daß auf der gesamten
Aufliegerlänge zwei Spannelemente 10 ausreichen, um die gesamte
Vorhangplane faltenfrei spannen zu können. Die Bodengleitschiene 13 ist unterhalb eines Bodenholmes 12 parallel zu diesem angeordnet, so daß sich bei dem in Fig. 4 dargestellten Spannen die Plane 5 oder die Gurte 4 um die abgerundete untere Vorderkante des Bodenholmes 12 herumziehen, während im entspannten Zustand (Fig. 5) die Vorhangplane etwa in einer Ebene mit dem Bodenholm abschließt (siehe auch Fig. 3b). Es ist natürlich auch jede andere Art der Umlenkung denkbar und es kann auf sie sogar verzichtet werden, wenn der Bodenholm 5 eine in der Zeichnung nicht näher dargestellte nach innen unten gerichtete Aufgleitfläche aufweist, auf die entsprechend geformte Bodenschiebeelemente keilförmig aufgleiten können, so daß sich ein Umlenken des Gurtes 4 oder der Vorhangplane 5 erübrigt, obwohl die Spannrichtung quer zur Vorhangrichtung verläuft.

Die Führung und Beabstandung der Bodengleitschiene sowie das Befestigen und ggf. Spannen der Gurte 4 wird durch ein besonderes Bodengleitelement 6 gewährleistet. Dieses Bodengleitelement weist einen U-förmigen Metallabschnitt auf, dessen unterer U-Schenkel Rollen für die Bodengleitschiene 13 trägt und dessen oberer U-Schenkel sich unterhalb des Bodenholmes 12 abstützt, während der U-Bogen mit einer Gegenplatte 8 ausgestattet ist, die ein Festschrauben des Gurtes 4 gestattet, wobei zum Schutze der Bodengleitelemente 6 das unterste Ende der Vorhangplane 5 frei über diese gehängt ist (Fig. 3b).

Zum Öffnen der erfindungsgemäßen spannbaren Vorhangplane werden also zunächst die Spannelemente entlastet. Dabei rückt die Bodengleitschiene 13 in eine solche Position, in der das seitliche Verschieben der Vorhangplane 1 problemlos möglich ist. Umgekehrt wird beim Verschließen und Verspannen der Vorhang- plane 5 vorgegangen.

<u>B e z u g s z e i c h e n l i s t e</u>

  1   Deckengleitschiene (Deckenlaufschiene)

  2   Deckengleitelement (Rollapparat)

  3   Gegenplatte

  4   Gurt

  5   Vorhangplane

  6   Bodengleitelement (Rollapparat)

  7   Verstärkungsblech

  8   Gegenplatte

  9   Grundplatte

10   Spannelement

11   Gabelkopf

12   Bodenholm

13   Bodengleitschiene (Bodenlaufschiene)

Ansprüche

1. Spannbare Vorhangplane (5) mit einer Decken- und einer Bodengleitschiene (1 und 13) zum seitlichen Verschieben der Vorhangplane (5) sowie Spannelementen (10) zum Verspannen der Vorhangplane (5) zwischen den beiden Gleitschienen, d a d u r c h   g e k e n n z e i c h n e t , daß die Bodengleitschiene (13) quer zu ihrer Längsrichtung verschiebbar ist und an ihr die Spannelemente (10) derart angreifen, daß sie die Vorhangplane (5) als Ganzes in einer von der Deckengleitschiene fortweisenden Richtung spannen.

2. Spannbare Vorhangplane nach Anspruch 1, dadurch gekennzeichnet, daß sich ein fest verankerter Bodenholm (12) parallel oberhalb der Bodengleitschiene (13) erstreckt und in Zugrichtung der Spannelemente (10) in Richtung auf den Bodenholm und im Winkel zur Planenrichtung zwischen den Gleitschienen verläuft.

3. Spannbare Vorhangplane nach Anspruch 1 oder 2, dadurch gekennzeichnet, daß die Bodengleitschiene (13) in Spannrichtung biegeversteift ist.

4. Spannbare Vorhangplane nach einem oder mehreren der Ansprüche 1 bis 3, gekennzeichnet durch doppelt wirkende Kolben-Zylinder-Einheiten als Spannelemente (10).

5. Spannbare Vorhangplane nach einem oder mehreren der Ansprüche 1 bis 4, gekennzeichnet durch die Vorhangplane (5) tragende, in den Gleitschienen laufende Gleitelemente (2 und 6) und zwischen je einem Deckengleitelement (2) und einem Bodengleitelement (6) verspannte Gurte (4).

6. Spannbare Vorhangplane nach einem oder mehreren der Ansprüche 1 bis 5, gekennzeichnet durch ein im wesentlichen U-förmiges Bodenschiebeelement (6), dessen unterer U-Schenkel in der Bodengleitschiene läuft, dessen oberer U-Schenkel sich unterhalb eines fest verankerten, sich parallel oberhalb der Bodenlaufschiene (13) erstreckenden Bodenholmes (12) abstützt und an dessen U-Bogen Befestigungselemente für die Vorhangplane (5) vorgesehen sind.

7. Spannbare Vorhangplane nach einem oder mehreren der Ansprüche 1 bis 6, gekennzeichnet durch Verriegelungselemente der Bodengleitschiene (13) im gespannten Zustand.

ST/dg

Fig. 1

0131706

0131706

Fig. 2

Fig. 3b

Fig. 3a

0131706

Fig. 4

Fig. 5